# EUROPEAN PATENT SPECIFICATION

(11) **EP 3 578 070 B1**
(45) Date of publication and mention of the grant of the patent: **02.11.2022**
(21) Application number: 19179127.6
(22) Date of filing: 07.06.2019
(51) Int. Cl.: A43D 119/00, A43D 8/32, A43B 9/12, A43B 3/12, B23K 26/00, B23K 26/03, B23K 26/082, B23K 26/359, B23K 26/364, B23K 26/38, B23K 26/402, B23K 37/04, A43D 93/00, A43D 8/00, A43D 8/16, A43B 13/38

(54) **APPARATUS FOR THE LASER ENGRAVING OF INSOLES AND METHOD FOR OPERATING SAID APPARATUS**
VORRICHTUNG ZUM LASERGRAVIEREN VON INNENSOHLEN UND VERFAHREN ZUM BETREIBEN DER VORRICHTUNG
APPAREIL POUR LA GRAVURE AU LASER DE SEMELLES INTÉRIEURES ET PROCÉDÉ DE FONCTIONNEMENT DUDIT APPAREIL

(30) Priority: 08.06.2018 IT 201800006167
(43) Date of publication of application: 11.12.2019
(73) Proprietor: SEIT ELETTRONICA S.R.L., 31049 Valdobbiadene (TV) (IT)
(72) Inventor: CODELLO, Edoardo, 31049 Valdobbiadene (TV) (IT); BELLE', Luca, 31053 Pieve di Soligo (TV) (IT)
(74) Representative: Gallo, Luca

(56) References cited:
- CN-A- 104 942 450
- CN-A- 107 639 349
- KR-A- 20050 110 895
- US-A1- 2013 132 038
- US-A1- 2013 160 326
- US-A1- 2018 150 058

## Description

### Field of application

The present invention regards an apparatus for the laser engraving of insoles and a method for operating said apparatus, according to the preamble of the respective independent claims.

The present apparatus is intended to be employed in the shoe manufacturing field for making engravings or cuts of shoe insoles by means of removal of material obtained with a laser beam.

More particularly, the apparatus, object of the present invention, is advantageously employable for making the lower surface of an insole, in whose grooves the upper of the shoe is fixed.

The invention is therefore inserted in the context of the industrial field of production of machines intended for the shoe field.

### State of the art

The production of a shoe generally occurs through methods which derive from historic traditions and which require the presence of an artisan to manually perform several production steps. In particular, the method for producing a shoe provides for starting from the manufacturing of the insole, i.e. the portion of the shoe against which the sole of the foot of a user who wears the shoe is abutted.

Normally, for making insoles, multiple layers of sheet-like elements generally made of paper material are glued together, between which a metal reinforcement is interposed (termed "shank" in the jargon of the field), in order to support the weight of the user who wears the shoe.

The sheet-like elements, and the shank interposed therebetween, are then pressed in suitable heated molds in order to receive the desired shape, for example in order to create the plantar arch present between the toe of the shoes with heel.

Once the insole is obtained with the desired shape, the upper is fixed thereto, i.e. the layers of fabric or leather that enclose the foot of the user. In particular, the upper is fixed to the lower surface of the insole, i.e. to the surface of the insole which, with the shoe worn, is directed towards the ground.

In order to be fixed to the insole, the upper is provided with at least one hem, which is folded under the insole and fixed to the lower surface of the latter at its external perimeter, preferably with nails or glue.

After having fixed the upper, one proceeds with applying the sole of the shoe, i.e. the portion of the shoe that comes into contact with the ground. In particular, the sole is generally fixed to the lower surface of the insole, to cover the hem of the upper, preferably by means of a glue layer.

In this manner, when the shoe is completed, the hem of the upper is interposed between the insole and the sole of the shoe and is fixed to both in order to prevent it from moving.

Since the hem of the upper is not extended over the entire surface of the insole, but only for a perimeter band thereof, it would act as an undesired thickness at such perimeter band. Indeed such thickness could be uncomfortable for the user who wears the shoe, especially if such thickness is not distributed along the internal perimeter band of the insole but is only present at some points along the perimeter band of the insole itself, as for example occurs in the case of sandals, in which the upper is constituted by a plurality of laces such that the user would perceive a plurality of projections below the sole of the insole.

In order to obtain a smooth insole lacking irritating projections, it is known to extract from the lower surface of the insole itself (i.e. that facing the sole), making one or more grooves, known in the technical jargon of the field with the term "channels", which are open along the perimeter edge of the insole and are extended towards the center of the latter. In particular, the channels have a depth at least equal to the thickness of the hem of the upper, in order to allow the latter to be entirely housed at its interior, thus preventing the formation of projections along the surface of the insole.

In order to obtain the insole perfectly smooth and lacking projections or troughs, it is necessary that each channel be perfectly counter-shaped with respect to the hem of the upper that must be housed therein, with regard to depth as well as extension. It is clear, therefore, that a manual processing, even if executed by an expert artisan, cannot lead to extremely precise results since it will always be subjected to a minimum error.

For such purpose, apparatuses are known for processing insoles which provide for making the channels of the insoles by means of laser engraving.

Such apparatuses for the laser engraving of insoles of known type are provided with at least one laser source (e.g. CO₂ laser source), adapted to generate a laser beam, and with a series of optical guide means (e.g. mirrors and/or lenses) adapted to direct the laser beam towards the work surface on which the insoles are arranged, which are to be worked along a pre-established operating path.

In particular, the apparatuses of known type allow making the channels starting from a computerized model of the shoe to be manufactured; from such model, the exact dimensions and positions of the hems of the upper are obtained, and consequently the exact dimensions and positions of the channels of the insole are obtained.

However, the apparatuses for the laser engraving of insoles of known type described in brief up to now have in practice shown that they do not lack drawbacks.

The main drawback of such apparatuses of known type lies in the fact that they require a manual loading of the insoles to be processed, which must be carried in a very precise manner since it necessary to position all the insoles in the exact position so that the laser beam engraves them at the desired point. Indeed, positioning an insole even only one millimeter more than what is necessary, forward or backward, will lead to an incorrect correspondence between the attained channels and the hem of the upper that must be coupled therein.

However, the insoles are often low-cost elements inside a shoe. Indeed, they are generally pressed within molds which, for cost reasons, are not specially created for that shoe model, but rather they are selected each time between a series of molds owned by the company, seeking that which best approximates the shape of the shoe to be made. For this reason, it is not certain that the insoles are perfectly corresponding to the model of the shoe to be made, and hence it is not certain that the hem of the upper is perfectly adapted to them, i.e. to the grooves provided thereon.

In addition, the insoles are generally made with low-cost materials, like recycled paper or cardboard, which do not allow ensuring the exact repeatability of the insoles made with the same mold; indeed, the paper can be affected by the humidity and by the temperature of the environment in which it is preserved or by the exposure to light, consequently modifying the shape of the insole. This imperfect correspondence between the computerized model to be attained and the various insoles available involves the need to each time operate small corrections to the position at which the insole is loaded on the work surface of the apparatus, such to compensate the shape errors present in the insoles, which must always be centered with respect to the computer model that the laser will come to achieve.

Such position corrections necessarily require the manual loading of the insoles on the apparatus which, in turn, involves rather long times since the operator must each time adjust the position of the insoles.

A further drawback, deriving from the poor quality of the insoles, is due to the fact that they must have variable density therein, for example due to anisotropies of the recycled material with which they are attained, or due to the fact that the mold used for deforming them and pressing them is not well suited to their shape and has not pressed them equally at all points of their extension. Such density differences can cause a different processing of the insole by a same laser beam, which will engrave denser zones in a lesser manner and less-dense zones in a greater manner, thus making channels of the insole that are not perfectly counter-shaped with respect to the hem of the upper that must be housed therein.

A further drawback tied to the imperfect repeatability of the insoles to be processed is that it is not always possible to know with certainty the geometry of their perimeter edges, nor is it possible to know with certainty where they are positioned in the work surface. Consequently, in order to have the certainty of making channels that are open on the perimeter edge of the insole, the laser engraving is executed on a surface larger than that occupied by the insole. It is clear that working on a wider surface than necessary involves a waste of energy in order to create the laser beam which acts wastefully beyond the perimeter edge of the insole, and a lengthening of the processing times of the insole itself.

For such purpose, known from the patent CN 10 4942450 is an apparatus for the laser engraving of insoles adapted to trim the perimeter edge of the insoles in order to eliminate possible production burrs. In particular, the aforesaid apparatus of known type is provided with a lit work surface, on which the insole to be engraved is arranged, and a camera ^{™} adapted to detect the position of the perimeter edge of the insole, which is easily detectable as the perimeter edge of a dark shape that partially covers the lit work surface. The apparatus also comprises a laser cutting head whose engraving path along the edge of the insole is modified on the basis of the position of the latter, detected by means of the camera.

Also the aforesaid apparatus of known type has in practice shown that it does not lack drawbacks, since, in particular, it is employable in a limited range of applications, since it is only able to execute the removal of burrs along the edge of the insole.

### Presentation of the invention

In this situation, the problem underlying the present invention is therefore that of overcoming the drawbacks shown by the apparatuses of known type, by providing an apparatus for the laser engraving of insoles and an operating method thereof, which are able to improve the engraving precision along the lower surface of the insole itself for making channels in which the hem of the upper is housed.

A further object of the present invention is to provide an apparatus for the laser engraving of insoles and an operating method thereof, which are able to execute the engraving of the channels always in the correct position of the insole, independent of the irregular position of the latter on the work surface.

A further object of the present invention is to provide an apparatus for the laser engraving of insoles and an operating method thereof, which are able to execute the engraving of the channels always in the correct position of the insole, independent of the irregular shape of the latter.

A further object of the present invention is to provide an apparatus for the laser engraving of insoles which is precise and reliable in use.

The invention is defined by an apparatus for the laser engraving of insoles according to the appended claim 1 and a method for operating an apparatus for the laser engraving of insoles according to claim 8.

### Brief description of the drawings

The technical characteristics of the invention, according to the aforesaid objects, are clearly found in the contents of the below-reported claims and the advantages thereof will be more evident in the following detailed description, made with reference to the enclosed drawings, which represent a merely exemplifying and non-limiting embodiment of the invention, in which:
- Fig. 1 shows a perspective view of the apparatus for the laser engraving of insoles, object of the present invention, in a first operating position;
- Fig. 2 shows a perspective view of the apparatus of figure 1 in a second operating position;
- Fig. 3 shows a perspective view of the apparatus of figure 1 in a third operating position;
- Fig. 4 shows a perspective view of the apparatus of figure 1 in a fourth operating position;
- Fig. 5 and 6 respectively show a plan view of an insole, arranged on the work surface, respectively before and after the engraving of the channels by the apparatus, object of the present invention;
- Fig. 7 shows a plan view of an ideal insole, positioned with respect to a pair of ideal jaws and with the operating path superimposed, along which the apparatus of figure 1 will come to execute the channels;
- Fig. 8 shows a perspective view of an ideal three-dimensional insole, positioned with respect to a pair of ideal jaws and with the operating path superimposed, along which the apparatus of figure 1 will come to execute the channels;

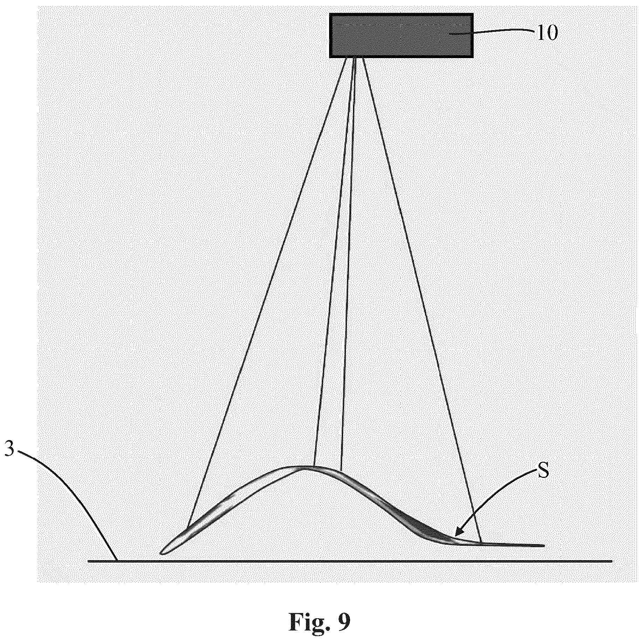

- Fig. 9 shows a schematic side view of the machine of figure 1, in which the optical means are indicated that are adapted to detect the position and preferably also the three-dimensional shape of the insole to be engraved;

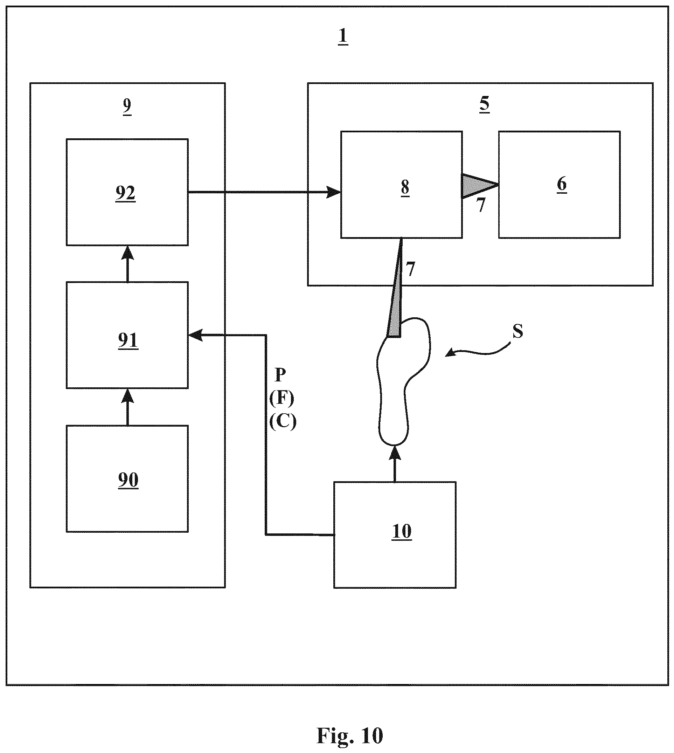

- Fig. 10 shows a block diagram indicating the main parts of the apparatus, object of the present invention, and the relations therebetween.

### Detailed description of a preferred embodiment

With reference to the enclosed drawings, reference number 1 overall indicates an apparatus for the laser engraving of insoles, object of the present invention.

The apparatus 1, according to the invention, is intended to be employed for making engravings or cuts of channels A of an insole S of a shoe.

In particular, the insole S to be engraved or to be cut with the present apparatus 1 is provided with at least one lower surface, which during use, with the shoe worn, is directed towards the ground, and with at least one upper surface, directed in the opposite direction with respect to the lower surface and in particular directed upward with the shoe worn.

Advantageously, in addition, such insole S can also be provided with at least one lateral surface, placed to connect between the lower surface and the upper surface, in particular in the case of shoes provided with a particularly high heel or provided with a wedge.

With the term "channel" it will be intended hereinbelow any one groove or blind engraving A1 made in an insole S, and in particular made on the lower surface of an insole S in order to house a hem of the upper of the shoe. In particular, such blind engravings A1 are not extended over the entire thickness of the insole, but are only provided with a bottom wall which defines a lowered zone of the surface from which they are extended. Such channels A can also be made on the upper surface of the insole itself or on its lateral surfaces, for example so to be able to embed ornamental elements, make decorations or writing, or also for making housing seats for nails, for example for fixing the heel of the shoe to the insole itself.

In addition, such channels A can also be through cuts A2 along the entire thickness of the insole, for example for making slots through which the nails are inserted which fix the heel to the insole, or several laces are inserted of the upper, such as a sandal.

The apparatus 1, object of the present invention, is thus advantageously employable for making any type of engraving on an insole of a shoe, whether this is of through type or not.

The apparatus 1, object of the present invention, comprises a support structure 2 intended to be set on the ground, to which at least one work surface 3 is fixed, on which at least one insole S to be engraved and/or cut is positioned with one of its surfaces, in particular the lower surface, arranged visible. For example, the insole S is intended to be arranged with its upper surface in abutment against the work surface 3 and with its lower surface arranged visible, in order to be able to execute on the latter engraving and/or cutting processing, as will be better described hereinbelow.

Advantageously, the apparatus 1 comprises at least one support 4 adapted to support and retain the insole S to be engraved or cut in position. In particular, each support 4 can be constituted by a template, or by a plurality of support points against which the insole S is susceptible of being abutted, or it can also be constituted by a plurality of suckers or by magnetic attraction means.

Advantageously, moreover, the apparatus 1 comprises first movement means mechanically associated with the work surface 3 and with each support 4, and such first movement means are adapted to drive the support 4 in order to retain the insole S.

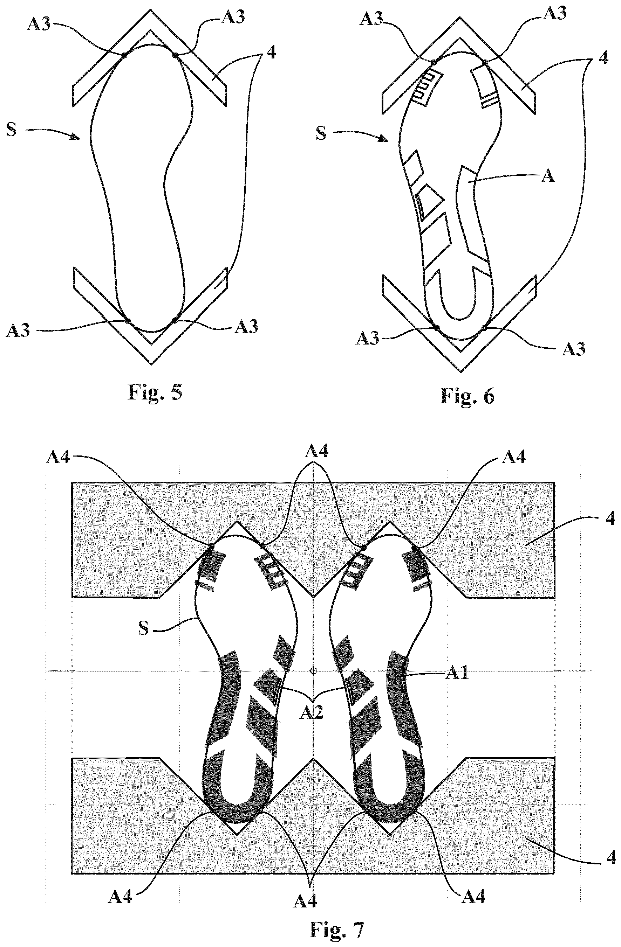

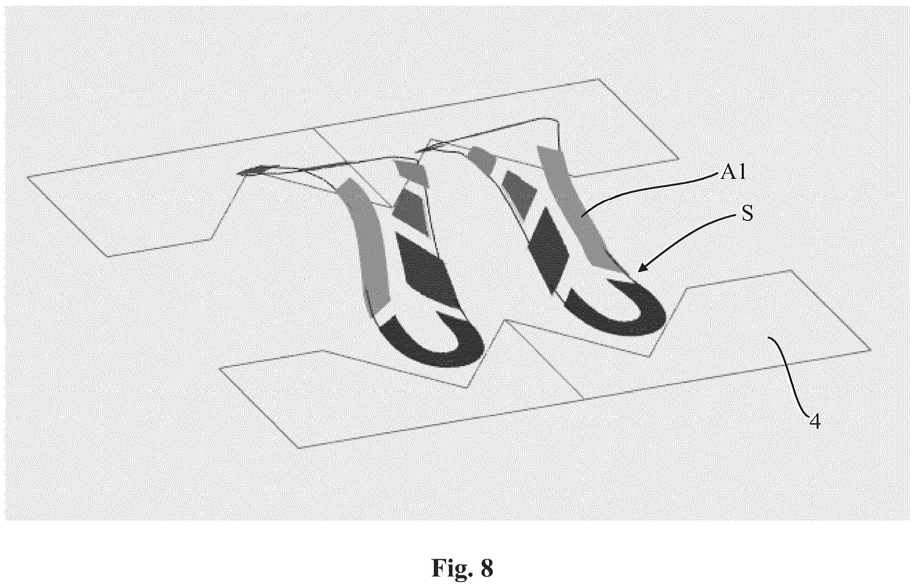

In accordance with a preferred embodiment, illustrated in the enclosed figures 5-8, each support 4 is provided with a pair of jaws, between which the insole S is susceptible of being arranged and retained. Preferably, moreover, the first movement means are mechanically associated at least to one of the two jaws of the support 4 in order to move it away from or closer to the opposite jaw up to abutting against the insole S, retaining it.

According to the invention, the apparatus 1 comprises at least one laser cutting head 5 adapted to engrave and/or to cut the insole S and mechanically mounted on the support structure 2, preferably in raised position with respect to the work surface 3.

In operation, the laser cutting head 5 is adapted to engrave or to cut the insole S along a pre-established operating path I. More in detail, the operating path I comprises at least one channel A to be engraved or to be cut on one of the surfaces of the insole S, and in particular on its lower surface which, with the shoe worn, is directed towards the ground. In addition, such channels A can comprise both blind engravings A1 and through cuts A2, as indicated more in detail hereinbelow.

Advantageously, in addition, the blind engravings A1 and/or the through cuts A2 can also be made on the upper surface of the insole S, i.e. on the surface of the insole S which, with the shoe worn, is directed towards the user who wears the shoe itself. In addition, the blind engravings A1 and/or the through cuts A2 can also be obtained on the lateral edge of the insole S, especially in the case of insoles S with lateral edge of several centimeters, so as to make decorations or writing or embed ornamental elements or also for making lateral channels A aimed to house the hem of the upper that is folded under the insole S.

According to the invention, the laser head 5 is provided with at least one laser source 6 adapted to generate a laser beam 7 in order to engrave or to cut the insole S. In addition, the laser head 5 is provided with optical guide means 8 for the laser beam 7 placed to intercept the laser beam 7 in order to direct it onto the insole S. More in detail, the optical guide means 8 advantageously comprise a plurality of mirrors and/or lenses rotatably mounted on the laser cutting head 5, on which the laser source 6 is susceptible of projecting the laser beam 7, and which can be rotated in order to direct the laser beam 7 itself in different directions along the operating path I.

In accordance with an example, illustrated in the enclosed figures, the apparatus 1 also comprises second movement means 12 connected to the laser cutting head 5 and adapted to move the latter with respect to the underlying work surface 3.

More in detail, the work surface 3 is horizontally extended along an extension direction X and the second movement means 12 preferably comprise a first guide 121 and a second guide 122, respectively arranged parallel and orthogonal with respect to the extension direction X of the work surface 3. Advantageously, the first guide 121 is slidably associated with the second guide 122 and is susceptible of sliding along the latter, transverse with respect to the extension direction X. In addition, the laser cutting head 5 is slidably associated with the first guide 121 and is susceptible of sliding along the latter, parallel to the extension direction X. In operation, the sliding of the first guide 121 and of the laser cutting head 5 allows moving the latter with respect to the work surface 3.

In accordance with a different example, not illustrated in the enclosed figures, the second movement means 12 of the laser cutting head 5 comprise an articulated arm, which is adapted to move the laser cutting head 5 with respect to the work surface 3 and to position it at any one point along the work surface 3 itself.

Advantageously, therefore, the second movement means 12 are adapted to move the laser cutting head 5 with respect to the work surface 3 and to position it at the insole S to be engraved, and preferably they are adapted to position the laser cutting head 5 at the zone of the insole S at which the engraving or cutting must be carried out. In this manner, therefore, the laser beam 7 hits the insole S in the most perpendicular way possible. Indeed, it is preferable that laser beam 7 hit the surface of the insole S in the most perpendicular way in order to ensure a correct attainment of the engraving or cutting.

Of course, also to be intended as the object of the present invention is an apparatus 1 in which the laser beam 7 does not engrave the insole S perpendicular to its surface. Indeed, due to the three-dimensional shape of the insole S (generally provided with a plurality of zones with different curvatures, such as the arch of the foot) and the shape of the laser beam 7 (generally propagated as a light cone), usually the laser beam 7 itself hits the insole S perpendicular to its surface, usually at a single point, and around such point the incidence angles are around 90°.

In order to engrave the insole S with the laser beam 7 in the most perpendicular way possible, the first movement means of the supports 4 are advantageously adapted to rotate the insole S in order to arrange the zone of the insole to be engraved or to be cut substantially orthogonal with respect to the laser cutting head 5. For example, the first movement means of the supports 4 are adapted to tilt the insole S with respect to the underlying work surface 3.

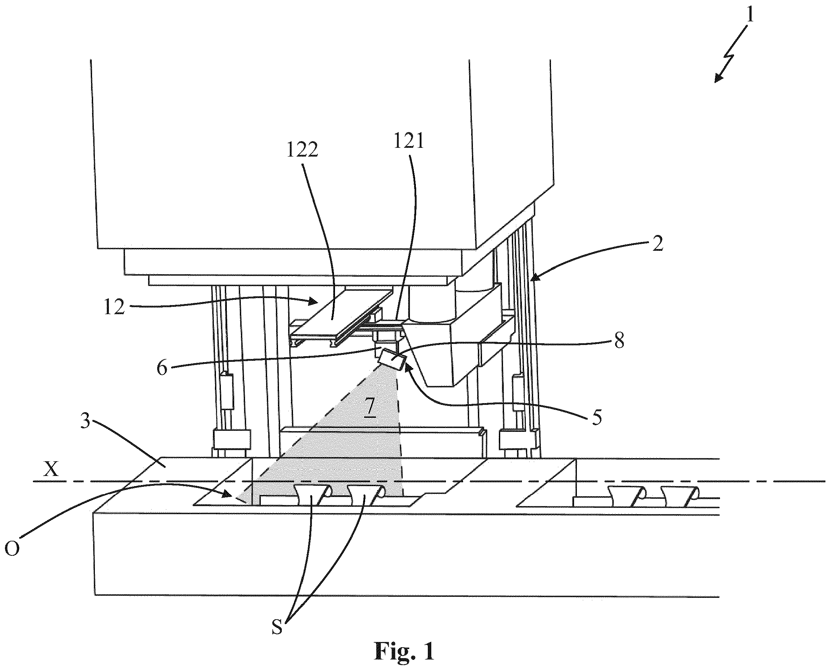

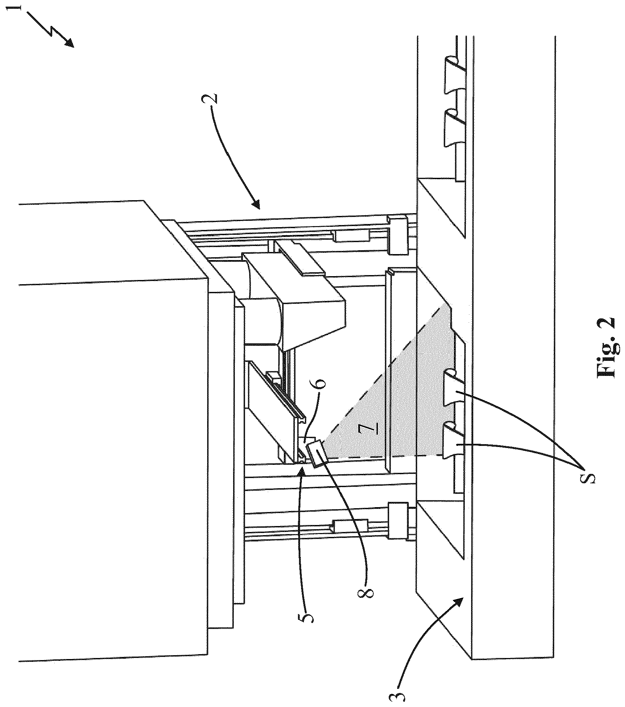

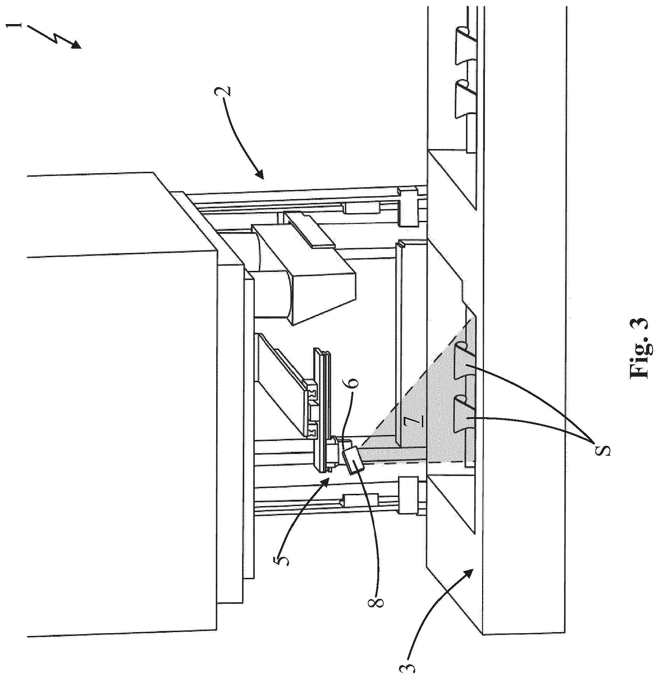

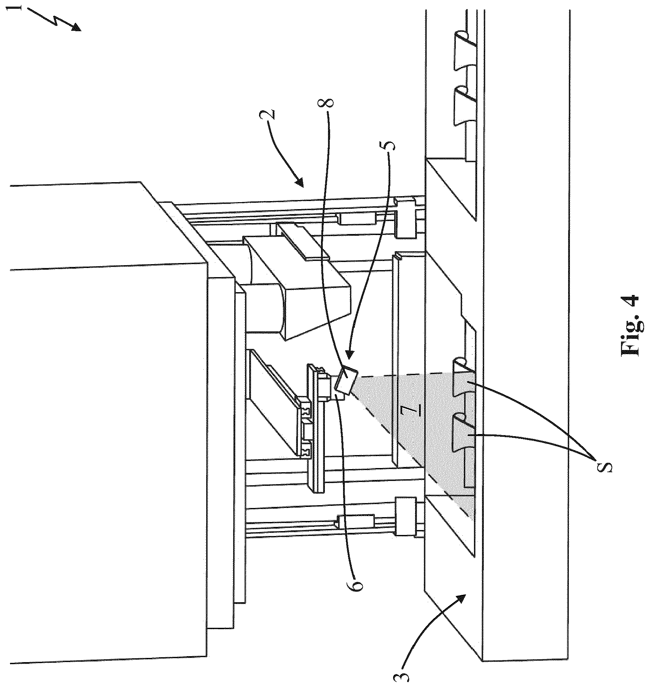

In accordance with the preferred embodiment illustrated in the enclosed figures 1 to 4, the laser cutting head 5 is susceptible of being moved into a plurality of operating positions within an operating area O of the work surface 3, preferably rectangular, within which the supports 4 are arranged. For example, in the enclosed figures 1 to 4, the laser cutting head 5 is respectively indicated in a first, a second, a third and a fourth operating position, which correspond to the four corners of the operating area O. Advantageously, the laser cutting head 5 is susceptible of being positioned at any one position comprised within the operating area O, such that it can be positioned at the zone of the insole S to be engraved or to be cut.

Another kinematically substantially equivalent example, not part of the present invention, is contemplated in which the laser cutting head 5 is fixed and the work surface 3 (or the supports 4 arranged on the work surface 3) is movable with respect to the engraving head 5, for example along guides parallel and/or orthogonal to its extension direction X.

According to the invention, the apparatus 1 also comprises a logic control unit 9 operatively connected to the laser cutting head 5 and programmed for driving the laser cutting head 5 itself to engrave and/or to cut the insole S along the operating path I.

More in detail, the logic control unit 9 is advantageously provided with a memory module 90 storing the operating path I which the laser beam 7 must follow along the insole S in order to make at least one channel A on the surface of the insole S directed towards the laser cutting head 5, and in particular on the lower surface of the insole S.

The logic control unit 9 is also provided with a command module 92 operatively connected to the optical guide means 8 of the laser cutting head 5 and programmed for commanding the latter to guide the laser beam 7 to engrave and/or to cut the insole S along the operating path I.

According to the invention, the apparatus 1 also comprises sensor means 10 directed towards the work surface 3 and adapted to detect at least the perimeter edge of the insole S, generating a corresponding position signal P containing at least one information relative to the position of the perimeter edge of the insole S. More in detail, the position signal P contains the information relative to the position of the insole S along the work surface 3, advantageously indicated as Cartesian coordinates taken with respect to a known reference, such as the center of the operating area O, or the center of the laser cutting head 5.

Advantageously, such sensor means 10 can be mechanically associated with the support structure 2 or they can be mechanically associated with a second support structure (not illustrated in the enclosed figures), which is side-by-side the support structure 2 but is not in direct mechanical connection with the latter in order to avoid that vibrations which developed during the operation of the apparatus 1 can also be transmitted to the sensor means 10, causing detection errors. Preferably, moreover, the sensor means 10 are arranged in raised position with respect to the work surface 3, so to be able to detect the insoles S arranged on the latter.

The apparatus 1 also comprises driving means 13 mechanically associated with the support structure 2 or with the second support structure of the sensor means 10, and such driving means 13 are adapted to drive the sensor means 10 to be moved with respect to the work surface 3.

For example, the driving means 13 comprise an articulated arm adapted to move the sensor means with respect to the work surface 3 in order to frame a specific portion of the insole S, so as to detect the perimeter edge of the insole with the greatest possible precision. In a further embodiment, the driving means 13 can comprise a pair of guides along which the sensor means 10 are susceptible of sliding in order to be moved along the work surface 3.

According to the idea underlying the present invention, the operating path I along which the laser beam 7 is guided in order to engrave and/or to cut the insole S is extended at least partly within the perimeter edge of the insole S itself, defining at least one processing area on the surface (e.g. lower) of the latter. In particular, in the aforesaid processing area, a corresponding channel A of the insole S will be attained.

According to the idea underlying the present invention, moreover, the logic control unit 9 is in data communication with the sensor means 10 in order to acquire the position signal P and is programmed for commanding the laser cutting head 5 to engrave and/or to cut the insole S at least in the processing area in order to make at least one blind engraving A1 and/or at least one through cut A2 in the surface of the insole S.

More in detail, the position signal P advantageously contains the position of the perimeter edge of the insole S encoded through the coordinates of a first plurality of significant points A3.

In addition, the operating path I stored in the memory module 90 of the logic control unit 9 contains at its interior, in addition to the coordinates of the channels A, also the coordinates of an ideal perimeter edge of an ideal insole to be engraved.

In accordance with the embodiment illustrated in figure 7, the ideal perimeter edge is advantageously encoded by means of a second plurality of significant points A4, preferably corresponding to four virtual tangency points between the ideal perimeter edge of the insole S and a pair of virtual jaws.

In an analogous manner, as for example indicated in figures 5 and 6, the first plurality of significant points A3 advantageously corresponds to the coordinates of four tangency points between the perimeter edge of the insole S detected by the sensor means 10 and the pair of jaws.

Advantageously, the logic control unit 9 is provided with a calculation module 91 in data communication with the sensor means 10, with the memory module 90 and with the command module 92. Such calculation module 91 is programmed for modifying the operating path I, and in particular the processing area defined thereby, in accordance with the position signal P in order to command the optical guide means 8 to guide the laser beam 7 towards the position of the insole S detected by the sensor means 10. In operation, the calculation module 91 is programmed for comparing the coordinates of the first plurality of significant points A3 with the coordinates of the second plurality of significant points A4, calculating a first shift value of the first plurality of significant points A3 from the second plurality of significant points A4 and modifying the coordinates of the channels A contained in the operating path I in accordance with the calculated first shift value, in order to superimpose the operating path I to be engraved and/or cut on the exact position in which the insole S is arranged. For example, the first shift value can indicate a translation and/or a rotation of the insole S detected by the sensor means 10 with respect to the ideal insole contained in the operating path I.

In addition, such first shift value can also indicate a shape variation of the detected insole S with respect to the ideal insole, for example because the insole S is slightly larger or slightly smaller than the ideal insole. In the latter case, the calculation module 91 not only modifies the position in which the operating path I is arranged, but it also carries out a scale variation of the operating path I itself, in order to adapt it to the actual dimensions of the insole S.

Advantageously, the coordinates of the channels A contained in the operating path I are fixed with respect to the second plurality of significant points A4, i.e. they are fixed with respect to the ideal perimeter edge of the ideal insole. In this manner, when the calculation module 91 modifies the operating path I in accordance with the first shift value, the channels A always remain centered with respect to the insole S provided with the shape and arranged in the position identified by the sensor means 10.

Also intended as the object of the present invention is the kinematically equivalent embodiment, in which the logic control unit is operatively connected with the first movement means of the supports 4 in order to move the supports 4 with respect to the work surface 3 in accordance with the first shift value calculated by the calculation module 91, in order to center the position of the insole S with the ideal position of the ideal insole. In the latter case, advantageously, it is not necessary to modify the operating path I set in the logic control unit.

Advantageously, the apparatus 1 is also capable of automatically converting two-dimensional sizes of the insole S into three-dimensional sizes. More in detail, in accordance with a preferred embodiment of the present invention, the sensor means 10 are also adapted to detect the three-dimensional shape of the insole S, generating a corresponding form signal F containing at least one information relative to the three-dimensional shape of the insole S and the logic control unit 9 is advantageously programmed for modifying the operating path I in accordance with the information relative to the three-dimensional shape of the insole S contained in the form signal F. More in detail, the form signal F advantageously contains the three-dimensional coordinates of the first plurality of significant points A3 of the three-dimensional shape of the insole S. In particular, such three-dimensional coordinates correspond to the two-dimensional coordinates of the position signal P (indicative of the position of each significant point A3) and in addition they comprise a third coordinate indicative of the height with respect to the work surface 3 of the significant point A3 itself. Advantageously, in this manner, the form signal F also comprises the position signal P.

In operation, the calculation module 91 of the logic control unit 9 is programmed for modifying the operating path I in accordance with the form signal F in order to command the optical guide means 8 of the laser cutting head 5 to guide the laser beam 7 to engrave and/or to cut the insole S provided with the three-dimensional shape detected by the sensor means 10. More in detail, the calculation module 91 is programmed for comparing the three-dimensional coordinates of the first plurality of significant points A3 with the coordinates of the second plurality of significant points A4, which are advantageously three-dimensional coordinates, calculating a second shift value of the first plurality of significant points A3 from the second plurality of significant points A4 and modifying the coordinates of the second plurality of significant points A4 contained in the operating path I in accordance with the calculated second shift value, in order to superimpose the operating path I on the exact three-dimensional shape of the insole S. Advantageously, in this manner, the apparatus 1 is capable of engraving or cutting the insole S always in the correct position, independent of errors of positioning the insole S in the supports 4 or of form errors which can alter the three-dimensional shape of the insole S itself.

In accordance with a first embodiment, the sensor means 10 comprise an optical sensor, in particular a laser sensor adapted to detect the three-dimensional shape of the insole S, generating the form signal F. More in detail, the laser sensor of the sensor means 10 is a laser triangulation sensor which allows carrying out remote measurements, i.e. measurements without contact and wear. The laser triangulation sensor emits a first laser beam which hits the insole S, from which a second laser beam is emitted of reflected light which returns to the laser triangulation sensor. The laser triangulation sensor then calculates the distance between this and the insole S by using simple trigonometric calculations, and through this distance determines the three-dimensional shape of the insole S and generates the form signal F.

In accordance with a second embodiment, the sensor means 10 comprise an optical sensor, in particular a camera and preferably a smart camera adapted to detect the perimeter edge of the insole S, generating the position signal P. More in detail, the camera acquires at least one image of the insole S and identifies, at its interior, the perimeter edges of the insole S by means of an image recognition program.

Also forming the object of the present invention is a method for operating an apparatus 1 for the laser engraving of insoles, in particular of the above-described type, regarding which the same reference numbers will be maintained hereinbelow for the sake of description ease.

The method according to the present invention comprises a step of arranging the insole S on the work surface 3 with a surface thereof arranged visible, and preferably within the support 4, optionally in which the first movement means move the jaws of the support 4 close to each other until they abut against the insole S, retaining it in position.

The method also comprises a step of laser engraving and/or cutting of the insole S, in which the laser cutting head 5 engraves and/or cuts the insole S along the operating path I. In operation, in such step of engraving or cutting, the optical guide means 8 of the laser cutting head 5 direct the laser beam 7 along the operating path I.

Advantageously, moreover, the second movement means 12 move the laser cutting head 5 (for example along the first and the second guide 121, 122) in order to position the laser cutting head 5 at the zone of the insole S to be engraved and/or cut, with the laser beam 7 which hits the insole S in the most perpendicular way possible. In addition, the first movement means of the supports 4 preferably rotate the insole S in order to arrange the zone to be engraved and/or cut substantially orthogonal with respect to the laser cutting head 5.

In accordance with the preferred embodiment illustrated in the enclosed figures 1 to 4, in such step of engraving and/or cutting the laser cutting head 5 is susceptible of being moved into a plurality of operating positions within the operating area O of the work surface 3. Advantageously, the laser cutting head 5 is susceptible of being positioned at any one position comprised within the operating area O, in order to be positioned at the zone of the insole S to be engraved or to be cut.

According to the invention, the operating method, before the step of engraving or cutting, comprises at least one first acquisition step, in which the sensor means 10 detect the position of the perimeter edge of the insole S and generate the position signal P, preferably containing the two-dimensional coordinates of the first plurality of significant points A3.

The method then comprises a first step of analysis of the position signal P, in which the logic control unit 9 compares the position signal P with the operating path I, calculates a first shift value of the perimeter edge of the insole S with respect to the operating path I and modifies the latter in accordance with the first shift value. More in detail, in such first step of analysis, the calculation module 91 compares the coordinates of the first plurality of significant points A3 contained in the position signal P with the coordinates of the second plurality of significant points A4 contained in the operating path I. Consequently, the calculation module 91 calculates the first shift value of the first plurality of significant points A3 with respect to the second plurality of significant points A4 and modifies the coordinates of the channels A contained in the operating path I in accordance with the first calculated shift value, in order to superimpose the operating path I to be engraved and/or cut on the exact position at which the insole S is arranged.

In addition, according to the invention, the method comprises a step of automatic centering of the laser cutting head 5, in which the logic control unit 9 directs the laser beam 7 towards the insole S arranged in the position detected by the sensor means 10, preferably moving the optical guide means 8 in order to direct the laser beam 7 along the operating path I modified in accordance with the first shift value.

According to the idea underlying the present invention, the operating path I, along which the laser beam 7 is directed, is extended at least partly within the perimeter edge of the insole S and defines at least one processing area on the surface of the insole S, and in particular on its lower surface.

In addition, during the aforesaid step of automatic centering, the logic control unit 9 directs the laser beam 7 towards the processing area into the position detected by the sensor means 10 in the first acquisition step, so as to engrave and/or to cut the insole S at least in the processing area for making at least one blind engraving A1 and/or at least one through cut A2 in the surface of the insole S itself.

Also intended as an object not part of the present invention is the kinematically equivalent embodiment, in which the logic control unit 9 does not modify the operating path I, but rather modifies the position of the insole S with respect to the operating surface. More in detail, in the latter operating form, the logic control unit 9 is operatively connected with the first movement means of the supports 4 and in the automatic centering step it moves the supports 4 with respect to the work surface 3 in accordance with the first shift value calculated by the calculation module 91 in order to center the position of the insole S with the ideal position of the ideal insole.

In accordance with the preferred embodiment of the apparatus 1, in which the sensor means 10 are adapted to detect the three-dimensional shape of the insole S, the method advantageously provides that, in the first acquisition step, the sensor means 10 detect the three-dimensional shape of the insole S and generate the form signal F, preferably containing the three-dimensional coordinates of the first plurality of significant points A3.

In operation, in the latter embodiment, in the first step of analysis, the logic control unit 9 compares the form signal F with the operating path I, calculates the second shift value of the three-dimensional shape of the insole S with respect to the operating path I and modifies the latter in accordance with such second shift value. More in detail, the calculation module 91 analyzes the form signal F and compares the three-dimensional coordinates of the first plurality of significant points A3 with the coordinates of the second plurality of significant points A4. Consequently, it calculates the second shift value and modifies the coordinates of the second plurality of significant points A4 contained in the operating path I in accordance with the calculated second shift value, in order to superimpose the operating path I on the exact three-dimensional shape of the insole S.

Advantageously, in this manner, the method for operating the apparatus for laser engraving allows engraving and/or cutting the insole S always in the exact position, independent of errors of positioning of the insole S in the support 4 or of form errors that alter the three-dimensional shape of the insole S itself.

Advantageously, the method, object of the present invention, also comprises a second acquisition step, subsequent to the step of engraving or cutting, in which the sensor means 10 detect the position of the blind engravings A1 and/or of the through cuts A2 made on the insole S in order to verify the conformity thereof with the operating path I, and generate a corresponding control signal C. In particular, the sensor means 10 detect the position and preferably also the three-dimensional shape of the channels A engraved and/or cut in the insole S and generate the control signal C containing the coordinates of a third plurality of significant points, identifying the position (and preferably also the three-dimensional shape) of the engraved and/or cut channels A.

More in detail, with the expression "three-dimensional shape of the channels A" it is intended not only their shape in plan view but also their depth, i.e. their height with respect to the work surface 3. Advantageously, in this manner, the sensor means 10 also detect if the channel A is a blind engraving A1 or a through cut A2 through the entire thickness of the insole.

Advantageously, the method then comprises a second step of analysis, in which the logic control unit 9 compares the control signal C with the operating path I, calculates a third shift value of the blind engravings A1 and/or of the through cuts A2 made on the insole S with respect to the operating path I and compares the third shift value with a maximum acceptable shift value, in order to verify if the blind engravings A1 and/or the through cuts A2 attained correspond, or do not correspond, with the position and with the desired three-dimensional shape.

In operation, the calculation module 91 analyses the control signal C and compares the coordinates of the third plurality of significant points with the coordinates of the second plurality of significant points A4 contained in the operating path I. Consequently, calculates the third shift value of the fourth plurality of significant points from the second plurality of significant points A4 and compares such third shift value with a maximum acceptable shift value and returns an error signal if the third shift value thus calculated is greater than the maximum acceptable shift value.

Advantageously, in this manner, the operating method allows verifying the quality of the channels A made by the apparatus 1 and allows certifying the conformity of the attained channels A with the desired I path.

The apparatus 1 and its operating method thus conceived therefore attain the pre-established objects. In particular, the apparatus 1 allows engraving and/or cutting an insole S always in the correct position, independent of errors of positioning or of shape of the insole S itself. Advantageously, such precision is also reflected in the completed shoe, which is in fact constituted by extremely precise elements which are perfectly joined together, and hence the completed shoe is very appreciable aesthetically and more comfortable to wear.

## Claims

1. Apparatus for the laser engraving of insoles, which comprises:
- a support structure (2) intended to be set on the ground;
- a work surface (3) fixed to said support structure (2) and on which at least one insole (S) is intended to be arranged, such insole (S) to be engraved and/or cut, positioned with a surface thereof arranged visible;
- at least one laser cutting head (5) adapted to engrave and/or to cut said insole (S) and mechanically mounted on said support structure (2), and such laser cutting head (5) is provided with:
- a laser source (6) adapted to generate a laser beam (7) in order to engrave or to cut said insole (S);
- optical guide means (8) for said laser beam (7) placed to intercept said laser beam (7) in order to direct it on said insole (S);
- a logic control unit (9) operatively connected to said laser cutting head (5) and programmed in order to drive said laser cutting head (5) to engrave and/or to cut said insole (S) along a pre-established operating path (I);
- sensor means (10) associated with said support structure (2) and directed towards said work surface (3), and such sensor means (10) are adapted to detect at least the perimeter edge of said insole (S), generating a corresponding position signal (P) containing at least one piece of information relative to the position of the perimeter edge of said insole (S);
said apparatus being **characterized in that** said operating path (I) is extended at least partly within the perimeter edge of said insole (S), defining at least one processing area on the surface of said insole (S); said logic control unit (9) being in data communication with said sensor means (10), being programmed for modifying said operating path (I) and said processing area in accordance with the information relative to the position of the perimeter edge of said insole (S) contained in said position signal (P), and being programmed for commanding said laser cutting head (5) to engrave and/or to cut said insole (S) at least in said processing area in order to make at least one blind engraving (A1) and/or at least one through cut (A2) in the surface of said insole (S).

2. Apparatus for the laser engraving of insoles according to claim 1, **characterized in that** said logic control unit (9) is provided with:
- a memory module (90) in which said operating path (I) is stored;
- a command module (92) operatively connected to the optical guide means (8) of said laser cutting head (5) and programmed for commanding said optical guide means (8) to guide said laser beam (7) to engrave and/or to cut said insole (S) along said operating path (I);
- a calculation module (91) in data communication with said sensor means (10), with said memory module (90) and with said command module (92), and such calculation module (91) is programmed for modifying said operating path (I) in accordance with said position signal (P) in order to command said optical guide means (8) to guide said laser beam (7) towards the position of said insole (S) detected by said sensor means (10).

3. Apparatus for the laser engraving of insoles according to any one of the preceding claims, **characterized in that** said sensor means (10) are adapted to detect the three-dimensional shape of said insole (S), generating a corresponding form signal (F); said logic control unit (9) being programmed for modifying said operating path (I) in accordance with the information relative to the three-dimensional shape of said insole (S) contained in said form signal (F).

4. Apparatus for the laser engraving of insoles according to claims 2 and 3, **characterized in that** the calculation module (91) of said logic control unit (9) is programmed for modifying said operating path (I) in accordance with said form signal (F) in order to command said optical guide means (8) to guide said laser beam (7) to engrave and/or to cut said insole (S) provided with the three-dimensional shape detected by said sensor means (10).

5. Apparatus for the laser engraving of insoles according to claim 3, **characterized in that** said sensor means (10) comprise an optical sensor, in particular a laser sensor adapted to detect the three-dimensional shape of said insole (S).

6. Apparatus for the laser engraving of insoles according to claim 1, **characterized in that** said sensor means (10) comprise an optical sensor, in particular a camera adapted to detect the perimeter edge of said insole (S).

7. Apparatus for the laser engraving of insoles according to any one of the preceding claims, **characterized in that** it comprises driving means (13) adapted to drive said sensor means (10) to be moved with respect to said work surface (3).

8. Method for operating an apparatus for the laser engraving of insoles according to claim 1, comprising the following operating steps:
- a step of arranging an insole (S) on said work surface (3) with a surface thereof arranged visible;
- a first acquisition step, in which said sensor means (10) detect the position of the perimeter edge of said insole (S) and generate said position signal (P);
- a first step of analysis of said position signal (P), in which said logic control unit (9) compares said position signal (P) with said operating path (I), calculates a first shift value for the perimeter edge of said insole (S) with respect to said operating path (I) and modifies said operating path (I) in accordance with said first shift value;
- a step of automatic centering of said laser cutting head (5), in which said logic control unit (9) directs said laser beam (7) towards said insole (S) arranged in the position detected by said sensor means (10);
- a step of laser engraving and/or cutting said insole (S), wherein said laser cutting head (5) engraves and/or cuts said insole (S) along said operating path (I);
said operating method being **characterized in that** it comprises the following operating steps:
- said operating path (I) is extended at least partly within the perimeter edge of said insole (S) defining at least one processing area on the surface of said insole (S);
- in said step of automatic centering, said logic control unit (9) directs said laser beam (7) towards said processing area into the position detected by said sensor means (10) in said first acquisition step;
- in said step of laser engraving and/or cutting, said laser cutting head (5) engraves and/or cuts said insole (S) at least in said processing area for making at least one blind engraving (A1) and/or at least one through cut (A2) in the surface of said insole (S).

9. Operating method according to claim 8 for operating an apparatus for the laser engraving of insoles according to claim 3, **characterized in that**:
- in said first acquisition step, said sensor means (10) detect the three-dimensional shape of said insole (S) and generate said form signal (F);
- in said first analysis step, said logic control unit (9) compares said form signal (F) with said operating path (I), calculates a second shift value for the three-dimensional shape of said insole (S) with respect to said operating path (I) and modifies said operating path (I) in accordance with said second shift value.

10. Operating method according to claim 8, **characterized in that** it comprises:
- a second acquisition step, subsequent to said engraving or cutting step, in which said sensor means (10) detect the position of said at least one blind engraving (A1) and/or at least one through cut (A2) made on said insole (S) and generate a control signal (C);
- a second analysis step, in which said logic control unit (9) compares said control signal (C) with said operating path (I), calculates a third shift value of said at least one blind engraving (A1) and/or at least one through cut (A2) made on said insole (S) with respect to said operating path (I) and compares said third shift value with a maximum acceptable shift value.

## Patentansprüche

1. Vorrichtung zum Lasergravieren von Innensohlen, die Folgendes umfasst:
- eine Tragstruktur (2), die dazu bestimmt ist, auf dem Boden aufgestellt zu werden;
- eine Arbeitsfläche (3), die an der genannten Tragstruktur (2) befestigt ist und auf der mindestens eine zu gravierende und/oder zu schneidende Innensohle (S) bestimmt ist, mit einer erkennbar angeordneten Oberfläche positioniert zu werden;
- mindestens einen Lasergravurkopf (5), der geeignet ist, die genannte Innensohle (S) zu gravieren und/oder zu schneiden und mechanisch auf der genannten Tragstruktur (2) montiert ist, wobei dieser Lasergravurkopf (5) ausgestattet ist mit:
- einer Laserquelle (6), die geeignet ist, einen Laserstrahl (7) zum Gravieren oder Schneiden der genannten Innensohle (S) zu erzeugen;
- optischen Führungselementen (8) des genannten Laserstrahls (7), die den genannten Laserstrahl (7) erfassend positioniert sind, um ihn auf die genannten Innensohle (S) zu richten;
- einem logischen Steuergerät (9), das operativ an den genannten Lasergravurkopf (5) angeschlossen und dazu programmiert ist, den genannten Lasergravurkopf (5) so zu betätigen, dass dieser die genannte Innensohle (S) entlang einer festgelegten Arbeitsstrecke (I) graviert und/oder schneidet;
- Sensorelemente (10), die mit der genannten Tragstruktur (2) verbunden und zu der genannten Arbeitsfläche (3) gerichtet sind, wobei die genannten Sensorelemente (10) geeignet sind, mindestens den umlaufenden Rand der genannten Innensohle (S) zu erfassen und mindestens ein eine Information bezüglich der Position des umlaufenden Rands der genannten Innensohle (S) entsprechendes Positionssignal (P) zu generieren;
wobei die genannte Vorrichtung **dadurch gekennzeichnet ist, dass** die genannte Arbeitsstrecke (I) mindestens zum Teil im Inneren des umlaufenden Rands der genannten Innensohle (S) verläuft und mindestens einen Bearbeitungsbereich auf der Oberfläche der genannten Innensohle (S) definiert; wobei das genannte logische Steuergerät (9) in Datenkommunikation mit den genannten Sensorelementen (10) steht, dazu programmiert ist, die genannte Arbeitsstrecke (I) und den genannten Bearbeitungsbereich entsprechend der Information in Bezug auf die Position des umlaufenden Rands der genannten Innensohle (S), die in dem genannten Positionssignal (P) enthalten ist, zu verändern und dazu programmiert ist, den genannten Lasergravurkopf (5) so zu steuern, dass dieser die genannte Innensohle (S) mindestens in dem genannten Bearbeitungsbereich graviert und/oder schneidet, um mindestens eine Blindgravur (A1) und/oder mindestens einen durchgehenden Schnitt (A2) in der Oberfläche der genannten Innensohle (S) auszuführen.

2. Vorrichtung zum Lasergravieren von Innensohlen nach Anspruch 1, **dadurch gekennzeichnet, dass** das genannte logische Steuergerät (9) ausgestattet ist mit:
- einem Speichermodul (90), in dem die genannte Arbeitsstrecke (I) gespeichert ist;
- einem Steuermodul (92), das operativ mit den optischen Führungselementen (8) des genannten Lasergravurkopfes (5) verbunden und dazu programmiert ist, die genannten optischen Führungselemente (8) so zu steuern, dass diese den genannten Laserstrahl (7) beim Gravieren und oder Schneiden der genannten Innensohle (S) entlang der genannten Arbeitsstrecke (I) führen;
- einem Berechnungsmodul (91), das mit den genannten Sensorelementen (10), mit dem genannten Speichermodul (90) und mit dem genannten Steuermodul (92) in Datenverbindung steht, wobei das Berechnungsmodul (91) dazu programmiert ist, die genannte Arbeitsstrecke (I) entsprechend dem genannten Positionssignal (P) zu ändern, um die genannten optischen Führungselemente (8) so zu steuern, dass diese den genannten Laserstrahl (7) zu der von den genannten Sensorelementen (10) erfassten Position der genannten Innensohle (S) führen.

3. Vorrichtung zum Lasergravieren von Innensohlen nach einem beliebigen der vorangegangenen Ansprüche, **dadurch gekennzeichnet, dass** die genannten Sensorelemente (10) geeignet sind, die dreidimensionale Form der genannten Innensohle (S) zu erfassen und ein entsprechendes Formsignal (F) zu generieren; wobei das genannte logische Steuergerät (9) dazu programmiert ist, die genannte Arbeitsstrecke (I) entsprechend der in dem Formsignal (F) enthaltenen Information in Bezug auf die dreidimensionale Form der genannten Innensohle (S) zu ändern.

4. Vorrichtung zum Lasergravieren von Innensohlen nach den Ansprüchen 2 und 3, **dadurch gekennzeichnet, dass** das Berechnungsmodul (91) des genannten logischen Steuergeräts (9) dazu programmiert ist, die genannte Arbeitsstrecke (I) entsprechend dem genannten Formsignal (F) zu ändern, um die genannten optischen Führungselemente (8) so zu steuern, dass diese den genannten Laserstrahl (7) beim Schneiden und/oder Gravieren der mit der von den genannten Sensorelementen (10) erfassten dreidimensionalen Form versehenen genannten Innensohle (S) zu führen.

5. Vorrichtung zum Lasergravieren von Innensohlen nach Anspruch 3, **dadurch gekennzeichnet, dass** die genannten Sensorelemente (10) einen optischen Sensor umfassen, insbesondere einen Lasersensor, der geeignet ist, die dreidimensionale Form der genannten Innensohle (S) zu erfassen.

6. Vorrichtung zum Lasergravieren von Innensohlen nach Anspruch 1, **dadurch gekennzeichnet, dass** die genannten Sensorelemente (10) einen optischen Sensor umfassen, insbesondere eine Kamera, die geeignet ist, den umlaufenden Rand der genannten Innensohle (S) zu erfassen.

7. Vorrichtung zum Lasergravieren von Innensohlen nach einem beliebigen der vorangegangenen Ansprüche, **dadurch gekennzeichnet, dass** sie Betätigungselemente (13) umfasst, die geeignet sind, die genannten Sensorelemente (10) so zu betätigen, dass diese im Verhältnis zur Arbeitsfläche (3) versetzt werden.

8. Verfahren zum Betreiben einer Vorrichtung zum Lasergravieren von Innensohlen nach Anspruch 1, umfassend die folgenden Arbeitsschritte:
- einen Schritt der Vorbereitung einer Innensohle (S) auf der genannten Arbeitsfläche (3) mit einer erkennbar angeordneten Oberfläche;
- einen ersten Erkennungsschritt, bei dem die genannten Sensorelemente (10) die Position des umlaufenden Rands der genannten Innensohle (S) erfassen und das genannte Positionssignal (P) generieren;
- einen ersten Schritt der Analyse des genannten Positionssignals (P), bei dem das genannte logische Steuergerät (9) das genannte Positionssignal (P) mit der genannten Arbeitsstrecke (I) vergleicht, einen ersten Wert der Abweichung des umlaufenden Rands der genannten Innensohle (S) im Vergleich zu der genannten Arbeitsstrecke (I) berechnet und die genannte Arbeitsstrecke (I) entsprechend dem genannten ersten Wert der Abweichung ändert;
- einen Schritt der automatischen Zentrierung des genannten Lasergravurkopfes (5), bei dem das genannte logische Steuergerät (9) den genannten Laserstrahl (7) zu der in der von den genannten Sensorelementen (10) erfassten Position angeordneten genannten Innensohle (S) richtet;
- einen Schritt des Lasergravierens und/oder -schneidens der genannten Innensohle (S), bei dem der genannte Lasergravurkopf (5) die genannte Innensohle (S) entlang der genannten Arbeitsstrecke (I) graviert und/oder schneidet;
wobei das genannte Verfahren zum Betreiben **dadurch gekennzeichnet ist, dass** es die folgenden Arbeitsschritte umfasst:
- die genannte Arbeitsstrecke (I) mindestens teilweise im Inneren des umlaufenden Rands der genannten Innensohle (S) verläuft und mindestens einen Bearbeitungsbereich auf der Oberfläche der genannten Innensohle (S) definiert;
- bei diesem Schritt der automatischen Zentrierung das genannte logische Steuergerät (9) den genannten Laserstrahl (7) zu dem genannten Bearbeitungsbereich in der von den genannten Sensorelementen (10) bei dem genannten ersten Erkennungsschritt erfassten Position richtet;
- bei dem genannten Schritt des Lasergravierens- und/oder -schneidens der genannte Lasergravurkopf (5) die genannte Innensohle (S) mindestens in dem genannten Bearbeitungsbereich graviert und/oder schneidet, um mindestens eine Blindgravur (A1) und/oder mindestens einen durchgehenden Schnitt (A2) in der Oberfläche der genannten Innensohle (S) auszuführen.

9. Verfahren zum Betreiben nach Anspruch 8 einer Vorrichtung zum Lasergravieren von Innensohlen nach Anspruch 3, **dadurch gekennzeichnet, dass**:
- bei diesem ersten Erkennungsschritt die genannten Sensorelemente (10) die dreidimensionale Form der genannten Innensohle (S) erfassen und das genannte Formsignal (F) generieren;
- bei dem genannten ersten Analyseschritt das genannte logische Steuergerät (9) das genannte Formsignal (F) mit der genannten Arbeitsstrecke (I) vergleicht, einen zweiten Wert der Abweichung der dreidimensionalen Form der genannten Innensohle (S) im Vergleich zu der genannten Arbeitsstrecke (I) berechnet und die genannte Arbeitsstrecke (I) entsprechend dem genannten zweiten Wert der Abweichung ändert;

10. Verfahren zum Betreiben nach Anspruch 8, **dadurch gekennzeichnet, dass** es Folgendes umfasst:
- einen zweiten Erkennungsschritt im Anschluss an den genannten Gravier- oder Schneidschritt, bei dem die genannten Sensorelemente (10) die Position der genannten mindestens einen Blindgravur (A1) und/oder des genannten mindestens einen durchgehenden Schnitts (A2) erfassen, die auf der genannten Innensohle (S) ausgeführt werden, und ein Steuersignal (C) generieren;
- einen zweiten Analyseschritt, bei dem das genannte logische Steuergerät (9) das genannte Steuersignal (C) mit der genannten Arbeitsstrecke (I) vergleicht, einen dritten Wert der Abweichung der mindestens einen genannten Blindgravur (A1) und/oder des mindestens einen genannten durchgehenden Schnitts (A2), die auf der genannten Innensohle (S) ausgeführt werden, im Vergleich zu der genannten Arbeitsstrecke (I) berechnet und den genannten dritten Abweichungswert mit einem maximal zulässigen Abweichungswert vergleicht.

## Revendications

1. Appareil pour la gravure au laser de semelles intérieures, qui comprend :
- une structure de support (2) destinée à reposer sur le sol ;
- une surface de travail (3) fixée à ladite structure de support (2) et sur laquelle au moins une semelle intérieure (S) à graver et/ou couper est destinée à être installée, positionnée de manière à ce qu'une surface de celle-ci soit visible ;
- au moins une tête de gravure au laser (5) apte à graver et/ou couper ladite semelle intérieure (S) et montée mécaniquement sur ladite structure de support (2), laquelle tête de gravure au laser (5) est pourvue de :
- une source laser (6) apte à générer un rayon laser (7) pour graver ou couper ladite semelle intérieure (S) ;
- des moyens de guidage optique (8) dudit rayon laser (7) placés pour intercepter ledit rayon laser (7) afin de l'orienter sur ladite semelle intérieure (S) ;
- une unité de contrôle logique (9) reliée de façon opérationnelle à ladite tête de gravure au laser (5) et programmée pour entraîner ladite tête de gravure au laser (5) afin qu'elle grave et/ou coupe ladite semelle intérieure (S) le long d'un parcours opérationnel (I) préétabli ;
- des moyens de détection (10) associés à ladite structure de support (2) et orientés vers ladite surface de travail (3), lesquels moyens de détection (10) sont aptes à détecter au moins le bord périphérique de ladite semelle intérieure (S) en générant un signal de position (P) correspondant contenant au moins une information concernant la position du bord périphérique de ladite semelle intérieure (S) ;
ledit appareil **étant caractérisé en ce que** ledit parcours opérationnel (I) se développe au moins partiellement au sein du bord périphérique de ladite semelle intérieure (S) définissant au moins une zone de travail sur la surface de ladite semelle intérieure (S) ; ladite unité de contrôle logique (9) étant en communication de données avec lesdits moyens de détection (10), étant programmée pour modifier ledit parcours opérationnel (I) et ladite zone de travail, selon l'information concernant la position du bord périphérique de ladite semelle intérieure (S) contenue dans ledit signal de position (P), et étant programmée pour commander à ladite tête de gravure au laser (5) de graver et/ou couper ladite semelle intérieure (S) au moins dans ladite zone de travail pour obtenir au moins une gravure non débouchante (A1) et/ou au moins une découpe traversante (A2) dans la surface de ladite semelle intérieure (S).

2. Appareil pour la gravure au laser de semelles intérieures selon la revendication 1, **caractérisé en ce que** ladite unité de contrôle logique (9) est pourvue de :
- un module de mémoire (90) dans lequel ledit parcours opérationnel est enregistré (I) ;
- un module de commande (92) relié façon opérationnelle aux moyens de guidage optique (8) de ladite tête de gravure au laser (5) et programmé pour commander auxdits moyens de guidage optique (8) de guider ledit rayon laser (7) pour qu'il grave et/ou coupe ladite semelle intérieure (S) le long dudit parcours opérationnel (I) ;
- un module de calcul (91) en communication de données avec lesdits moyens de détection (10), avec ledit module de mémoire (90) et avec ledit module de commande (92), lequel module de calcul (91) est programmé pour modifier ledit parcours opérationnel (I) selon ledit signal de position (P) afin de commander auxdits moyens de guidage optique (8) de guider ledit rayon laser (7) vers la position de ladite semelle intérieure (S) détectée par lesdits moyens de détection (10).

3. Appareil pour la gravure au laser de semelles intérieures selon l'une quelconque des revendications précédentes, **caractérisé en ce que** lesdits moyens de détection (10) sont aptes à détecter la forme tridimensionnelle de ladite semelle intérieure (S) en générant un signal de forme (F) correspondant ; ladite unité de contrôle logique (9) étant programmée pour modifier ledit parcours opérationnel (I) selon l'information concernant la forme tridimensionnelle de ladite semelle intérieure (S) contenue dans ledit signal de forme (F).

4. Appareil pour la gravure au laser de semelles intérieures selon les revendications 2 et 3, **caractérisé en ce que** le module de calcul (91) de ladite unité de contrôle logique (9) est programmée pour modifier ledit parcours opérationnel (I) selon ledit signal de forme (F) afin de commander auxdits moyens de guidage optique (8) de guider ledit rayon laser (7) afin qu'il grave et/ou coupe ladite semelle intérieure (S) pourvue de la forme tridimensionnelle détectée par lesdits moyens de détection (10).

5. Appareil pour la gravure au laser de semelles intérieures selon la revendication 3, **caractérisé en ce que** lesdits moyens de détection (10) comprennent un capteur optique, en particulier un capteur laser apte à détecter la forme tridimensionnelle de ladite semelle intérieure (S).

6. Appareil pour la gravure au laser de semelles intérieures selon la revendication 1, **caractérisé en ce que** lesdits moyens de détection (10) comprennent un capteur optique, en particulier une caméra apte à détecter le bord périphérique de ladite semelle intérieure (S).

7. Appareil pour la gravure au laser de semelles intérieures selon l'une quelconque des revendications précédentes, **caractérisé en ce qu'**il comprend des moyens d'entraînement (13) aptes à entraîner lesdits moyens de détection (10) pour qu'ils se déplacent par rapport à ladite surface de travail (3).

8. Procédé de fonctionnement d'un appareil pour la gravure au laser de semelles intérieures selon la revendication 1, comprenant les étapes opérationnelles suivantes:
- une étape d'installation d'une semelle intérieure (S) sur ladite surface de travail (3) de manière à ce qu'une surface de celle-ci soit visible ;
- une première étape d'acquisition, dans laquelle lesdits moyens de détection (10) détectent la position du bord périphérique de ladite semelle intérieure (S) et génèrent ledit signal de position (P) ;
- une première étape d'analyse dudit signal de position (P), dans laquelle ladite unité de contrôle logique (9) compare ledit signal de position (P) avec ledit parcours opérationnel (I), calcule une première valeur d'écart du bord périphérique de ladite semelle intérieure (S) par rapport audit parcours opérationnel (I) et modifie ledit parcours opérationnel (I) selon ladite première valeur d'écart ;
- une étape de centrage automatique de ladite tête de gravure au laser (5), dans laquelle ladite unité de contrôle logique (9) oriente ledit rayon laser (7) vers ladite semelle intérieure (S) installée dans la position détectée par lesdits moyens de détection (10) ;
- une étape de gravure et/ou de découpe au laser de ladite semelle intérieure (S), dans laquelle ladite tête de gravure au laser (5) grave et/ou coupe ladite semelle intérieure (S) le long dudit parcours opérationnel (I) ;
ledit procédé de fonctionnement étant **caractérisé en ce qu'il** comprend les étapes opérationnelles suivantes:
- ledit parcours opérationnel (I) se développe au moins partiellement au sein du bord périphérique de ladite semelle intérieure (S) définissant au moins une zone de travail sur la surface de ladite semelle intérieure (S) ;
- à ladite étape de centrage automatique, ladite unité de contrôle logique (9) oriente ledit rayon laser (7) vers ladite zone de travail dans la position détectée par lesdits moyens de détection (10) à ladite première étape d'acquisition
- à ladite étape de gravure et/ou de découpe au laser, ladite tête de gravure au laser (5) grave et/ou coupe ladite semelle intérieure (S) au moins dans ladite zone de travail pour obtenir au moins une gravure non débouchante (A1) et/ou au moins une découpe traversante (A2) dans la surface de ladite semelle intérieure (S).

9. Procédé de fonctionnement selon la revendication 8 d'un appareil pour la gravure au laser de semelles intérieures selon la revendication 3, **caractérisé en ce que** :
- à ladite première étape d'acquisition lesdits moyens de détection (10) détectent la forme tridimensionnelle de ladite semelle intérieure (S) et génèrent ledit signal de forme (F) ;
- à ladite première étape d'analyse ladite unité de contrôle logique (9) compare ledit signal de forme (F) avec ledit parcours opérationnel (I), calcule une deuxième valeur d'écart de la forme tridimensionnelle de ladite semelle intérieure (S) par rapport audit parcours opérationnel (I) et modifie ledit parcours opérationnel (I) selon ladite deuxième valeur d'écart.

10. Procédé de fonctionnement selon la revendication 8, **caractérisé en ce qu'**il comprend :
- une deuxième étape d'acquisition, postérieure à ladite étape de gravure ou découpe, dans laquelle lesdits moyens de détection (10) détectent la position desdites au moins une gravure non débouchante (A1) et/ou au moins une découpe traversante (A2) obtenues sur ladite semelle intérieure (S) et génèrent un signal de commande (C) ;
- une deuxième étape d'analyse, dans laquelle ladite unité de contrôle logique (9) compare ledit signal de commande (C) avec ledit parcours opérationnel (I), calcule une troisième valeur d'écart desdites au moins une gravure non débouchante (A1) et/ou au moins une découpe traversante (A2) obtenues sur ladite semelle intérieure (S) par rapport audit parcours opérationnel (I) et compare ladite troisième d'écart avec une valeur d'écart maximale acceptable.
